# EUROPEAN PATENT SPECIFICATION

(11) **EP 0 844 184 B1**
(45) Date of publication and mention of the grant of the patent: **09.10.2002**
(21) Application number: 97918164.1
(22) Date of filing: 08.05.1997
(51) Int. Cl.: B65B 61/28, B65G 69/16

(54) **Sack evacuation method for sacking machines**
Methode zum Entladen von Beuteln aus Verpackungsmaschinen
Méthode pour évacuer des sacs hors de machines à ensacher

(30) Priority: 08.05.1996 ES 9601029; 08.05.1996 ES 9601035
(43) Date of publication of application: 27.05.1998
(73) Proprietor: Payper, S.A., 25191 Lleida (ES)
(72) Inventor: PADULLES BAUTISTA, Manuel, Payper, S.A., 25191 Lleida (ES)
(74) Representative: Carpintero Lopez, Francisco
(86) International application number: ES9700118
(87) International publication number: WO97042084

## Description

### OBJECT OF THE INVENTION

The present invention relates to a sack evacuation method for sacking machines and in particular in the conveyor belts used in machines of this kind to convey the sacks during their filling, sealing and external ejection process outside such machines.

The object of the invention is to prevent the sack sealing weld, provided just before the sacks are ejected, from suffering during the ejection operation, and for the product contained within said sacks to be homogeneously distributed within the same, in order to improve conditions for their subsequent palletisation.

A further object of the invention is to successfully adjust the height of the ejection conveyor belt to suit the level of the belt to the different heights of the sacks.

The invention applies to sacking granular and powdered products, namely for instance cattle feed, fertilisers, plastic chaff for industrial processes, ceramic enamels, etc.

### BACKGROUND OF THE INVENTION

There are several known types of sacking machines in which the raw material used is a plastic heat-weldable tubular body of unlimited length, supplied in a roll, with side folds or bellows, in which three operative means are basically established, a sack forming means, which suitably fragments the continuous roll and concurrently provides a seal at the bottom end of each unit or sack, a filling mechanism which supplies each sack with the relevant quantity of the product at issue, and a sealing mechanism which suitably seals the sack, on being filled as aforesaid, ready to be shipped or stored.

Noteworthy in this sense is German patent DE-4,314,711, which discloses a filling and sealing device for sacks previously formed from a continuous roll or band, wherein each sack or unit is gripped at an area close to its mouth by means of clamps that overturn the sack 90°, open and position it beneath the filling mechanism, after which the sack is again overturned 90° and taken to a sealing station, which lies above a conveyor belt, where the sack is deposited, now sealed, standing perfectly upright, to prevent the possibility of the sack from brusquely swaying laterally, upon hitting the conveyor belt, and causing it to be opened through the recently established and still warm weld.

US patent 4,510,736 shows another machine of this kind, noteworthy therein being a first sack bottom carrying stage, in which propelling nozzles are used, a sack filling stage and a sack sealing stage, in accordance with the general basic outline referred to before. The sacks must also in this case be placed standing fully upright in order for the sealing weld not to suffer and be damaged due to the actual pressure exerted by the product.

Now therefore, the object of the current sack ejection art at the outlet from the respective sacking machines, is for the sack to be deposited on the ejection conveyor belt in a perfectly upright position and with a synchronisation of movements suited for such uprightness to be maintained, in order thereby for the weld sealing the sack to suffer no pressure whatsoever while it travels on such conveyor belt, allowing at least from the theoretical standpoint enough time for the weld to be cooled down and for the seal to be fully stable. In this sense, the German 4,314,711 and US 4,510,736 patents referred to above, for instance, provide that the ejection conveyor belt has perpendicular walls locked to it, defining a housing to stabilise the sacks in said upright position.

This solution, which is apparently an advantage since, as noted before, the sealing weld is kept without tensions whilst it is being transferred on the conveyor belt, in practice poses a twofold problem, for on the one hand the conveyor belt has to be rather long, in order for cooling time to be efficient, which endears the installation and results in a substantial taking up of available space, and on the other hand, at the time each sack leaves the conveyor belt, the sack swings brusquely over an angle in excess of 90°, which results in the load being substantially displaced towards the sealing mouth, which means that an undue stress is exerted on said weld which might even break it in spite of the cooling time elapsed, and a product concentration which means that the sack will lose its formal evenness, which will subsequently hinder the stacking and/or palletising operations.

Reference can moreover be made to German patent 2,615,270, which relates to a sack filling machine, especially devised for a particular case in which the sacks are rather wide, the purpose being likewise for the sacks to be held upright. This case also provides for the aforesaid basic stages, namely filling the sack or bag and sealing the same, cooling the weld, and is particular also in that a mechanical pusher is positioned beneath the filling stage to compact the sack contents.

Reference can also be made to European patent EP 0 516 979, which describes a process for making, filling and sealing sacks which consequently includes the three basic functional stages which are the common denominator of most machines of this kind, referred to hereinbefore, but the working of the process according to this patent requires the use of highly complex mechanisms which adversely affect both the cost of the machine and its subsequent maintenance.

Now then, given that in practice there are variously sized sacks, namely as to height, the conveyor belt is placed at a level suited to the sacks of greater size, and thus, although it full satisfactorily discharges its intended function when the machine works with large sized sacks, in the opposite case, i.e. when the machine works with small sacks, the sacks are hurled violently against the conveyor belt, which may even damage the sacks and at best produces an excessive compacting of the product, which is obviously not to be desired.

Document US-A-4 510 736 is known that relates to a machine for filling and closing bags of plastic material that has a filling mouth and a transporting band on which once the bag is full the same is fitted and displaced and a carriage for transporting the bag to the filling mouth. The formation of the bag is effected through a foil web from which the bags are cut and welded.

### DESCRIPTION OF THE INVENTION

The method subject of the invention as defined in claim 1 fully solves the various itemised aspects of the above-mentioned drawbacks, and is based upon deliberately supplying the sacks with an inclination, specifically with their top end advanced with respect to the bottom end, which is kept stable by said sacks leaning on their immediately preceding sack, which is obviously also inclined, thereby for the inclination of said sacks to gradually increase along the conveyor belt, up the free end of the belt, at which the terminal sack is in a fully collapsed position, i.e. horizontal.

This means that, since the inclination of the sack is slight upon leaving the sealing mechanism, tension on the weld line at the mouth is almost non-existent, this tension increasing very slightly and gradually as the sack moves forward in the conveyor belt, and thus since the sack is collapsed in a totally smooth manner, both said tension and the displacement of material towards the mouth of the sack are maintained at minimum quantities, thereby for stability of the seal to be perfectly assured in spite of the length of the ejection conveyor belt being small.

This inclination of the sacks is achieved by suitably controlling the intermittent motion of the conveyor belt, stopping of the belt being thus controlled by a light cell which allows the belt to be braked and thereby the uprightness of the sacks to be graded, thereby for an offset to be obtained between the said seal point and the base of the sack, which may result in a slight initial inclination which, upon release of the top end of the sack after being sealed, allows it to swing sideways, simply due to gravity, until the definitive inclination is achieved which is defined by the position of the immediately preceding sack.

To complement the structure described and in accordance with another characteristic of the invention, at the outlet from the conveyor belt there is a downwardly inclined plane, preferably comprising a roller platform, which forces the sack to move briefly with its mouth lying at a level substantially below its bottom, which results in the material "slipping" and, in accordance with the length and inclination of said inclined plane, in turn in a perfectly uniform distribution of the product within the sack, the sack tending to be volumetrically shaped as a regular prism.

Another improvement of the invention, which also solves the drawbacks posed by the differing height of the sacks, refers to a height adjustment mechanism which allows the level of the conveyor belt to be suited to the specific requirements defined by each particular sack size, thereby for placement of the sacks upon said belt to take place in optimum conditions.

More specifically, and in order to achieve the above, the chassis supporting the conveyor belt may move vertically along a pair of vertical guides, which form part of the frame of the machine and which, laterally arranged, are closed by a top bridge, said conveyor belt chassis being suspended within said bridge by means of a pair of chains which are suitably guided by pinions or notched sectors, and are locked through their other end to a nut moving along a spindle mounted on said transverse top bridge and drivable, through a suitable transmission, by means of a hand-driven wheel established on the front column or guide of the frame.

Thus, driving of said wheel in one direction or another causes the chains to pull or retreat, the chassis supporting the conveyor belt consequently moving in one direction or another, thereby to be adjusted, as concerns its top operative plane, to the specific requirements of each sack size.

The same chassis supporting the conveyor belt simultaneously acts as a support for the tamping mechanism used for compacting the product within the sacks, during the sack filling phase, the height of said tamping-compacting mechanism being thereby at the same time and in turn adjusted to the different sack sizes.

### DESCRIPTION OF THE DRAWINGS

In order to provide a fuller description and contribute to the complete understanding of the characteristics of this invention, a set of drawings is attached to the specification as an integral part thereof which, while purely illustrative and not fully comprehensive, shows the following:
Figure 1.- Is a side perspective of an automatic sacking machine provided with the improvements applicable to the sack ejecting conveyor belt, in accordance with one of the essential objects of the invention, showing the position said sacks gradually take up along the ejection line.
Figure 2.- Is a rear perspective of the same sector of the machine shown in the preceding figure, i.e. the ejection line, now without any sacks.
Figure 3.- Is a side elevation view of the sack ejection process from the sack sealing stage.
Figure 4.- Is a schematic side elevation representation of the ejection belt of a sacking machine, together with the sack tamping-compacting mechanism, provided with the height adjustment mechanism which is another of the improvements of the invention.
Figure 5.- Is a schematic plan representation of the unit shown in the preceding figure.
Figure 6.- Is an enlarged side elevation close-view of the bridge used in the unit of the preceding two figures, clearly showing the mechanism for transmission to and entraining of the mobile chassis supporting the belt.
Figure 7.- Is a profile close-view of the guiding pinions for the chains supporting said chassis.
Figure 8.- Is a sectional close-view of the bridge shown in figure 6, at the level of the wheel driving the mechanism.
Figure 9.- Is finally a perspective close-view of the unit represented in figure 4, suitably integrated in an autonomous sacking machine.

### PREFERRED EMBODIMENT OF THE INVENTION

With reference to these figures, an autonomous sacking machine (1) is provided, as is conventionally the case, with an ejection conveyor belt (2) upon which the sacks (3) are placed in a slightly inclined position, in accordance with the process of the invention, with their top end advanced with respect to the bottom end, and namely to a suitable extent in order that the sacks swing in this sense simply due to gravity.

More specifically, and as noted before, the intermittent movement of the conveyor belt (2) is controlled by a device preferably consisting of a light cell (9) which detects the existence of sacks on the conveyor belt and controls their uprightness when the conveyor belt is stopped, causing the belt to stop moving at the same time as the carriage (4) keeps on moving the full sacks towards the sealing head (5), thereby for the sack to take up such slightly inclined position already during the sack sealing operation, which is kept stable by the grips holding the sack close to its mouth, thereby upon said grips releasing the sack (3) just before the conveyor belt (2) moves forward again, for the sack (3) to swing towards a limiting position defined by its own abutment on the immediately preceding sack.

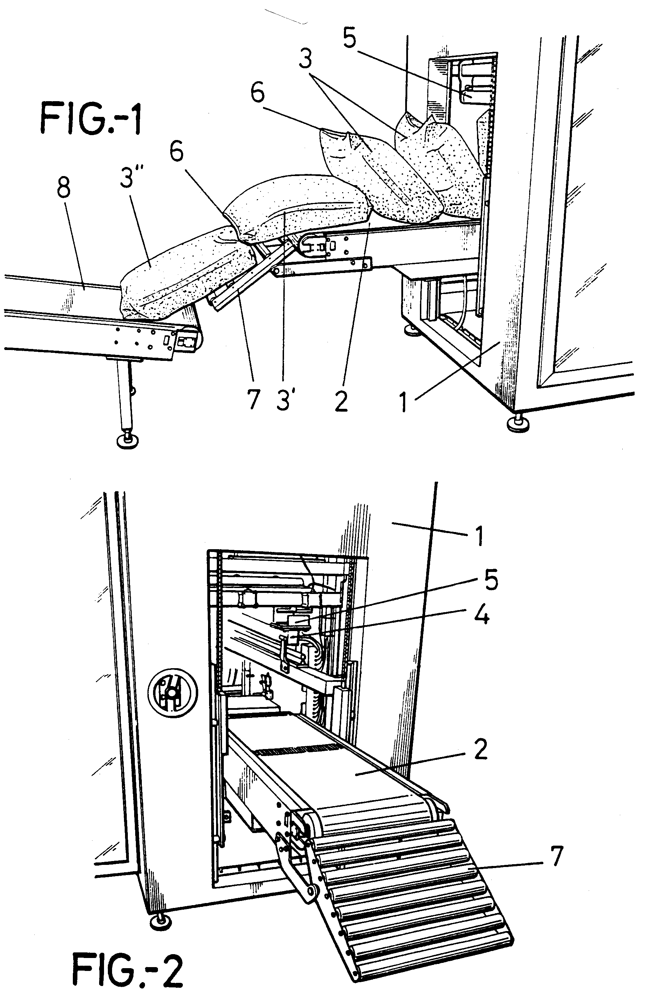

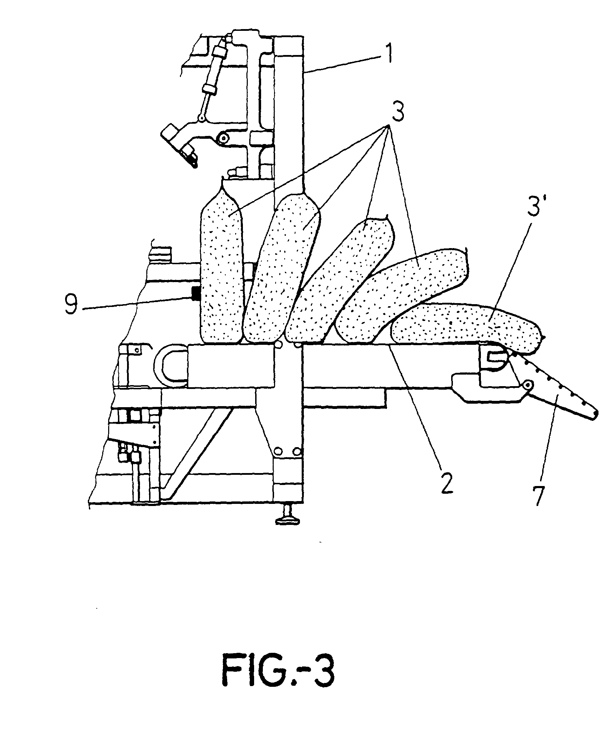

With reference particularly to figures 1 and 3, the inclination of the sacks (3) gradually increases along the short run defined by the conveyor belt (2) until the sacks take up a fully horizontal position (3'), which takes place just before the immediately preceding sack (3") has fully abandoned the conveyor belt (2).

This means, as aforesaid, that the gradual pivoting of the sacks (3) takes place slowly, and final pivoting (3') smoothly, without being moved or collapsed brusquely which might result in their load moving noticeably towards their sealed end (6), which suffers almost no stress whatsoever during the first ejection phase, i.e. whilst the weld is being cooled, and at the final phase the stress is also minimum, which means that the risk of the weld being damaged is almost non-existent.

Inclination of the sacks is achieved by suitably controlling the intermittent motion of the conveyor belt, thereby for stoppage of the latter to take place controlled by a light cell which allows the conveyor belt to be braked and thus the uprightness of the sacks to be perfectly graded.

Additionally, as was also noted before, a downwardly inclined plane is established at the outlet from the conveyor belt (2), comprising a roller platform (7) ending in another conveyor belt or the like (8), and the inclined plane (7) thus defines a short run for the sacks (3) in an almost inverted position, i.e. with their mouth pointing downwards, which means that the material housed therein, initially compacted against the bottom of the sack, will extend homogeneously towards its mouth, the sack being at the same time flattened, adopting a shape, tending towards that of a regular prism, which is more suitable for it to be subsequently stacked and/or palletised.

These improvements of the invention thus enable ejection of the sacks to take place without the least risk of their sealing weld being damaged and with an optimum uniform distribution of the product contained within the same.

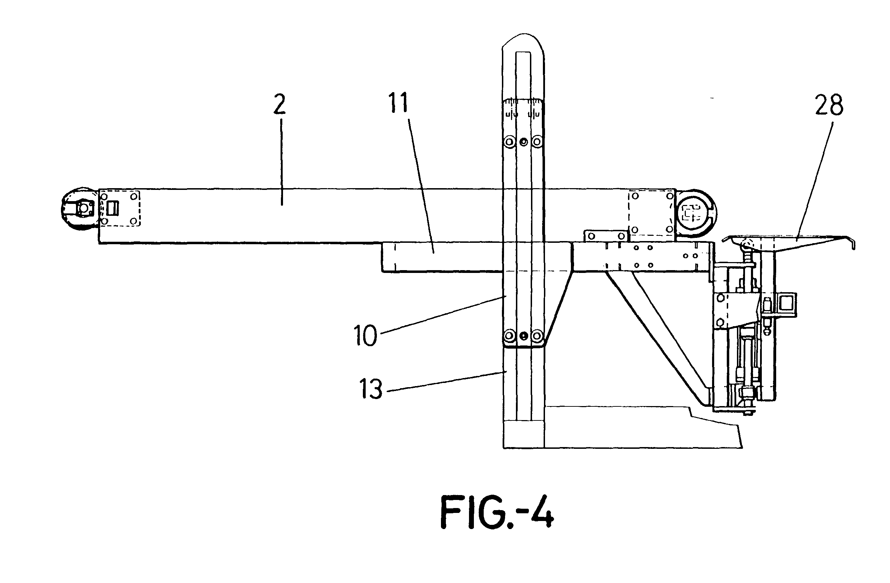

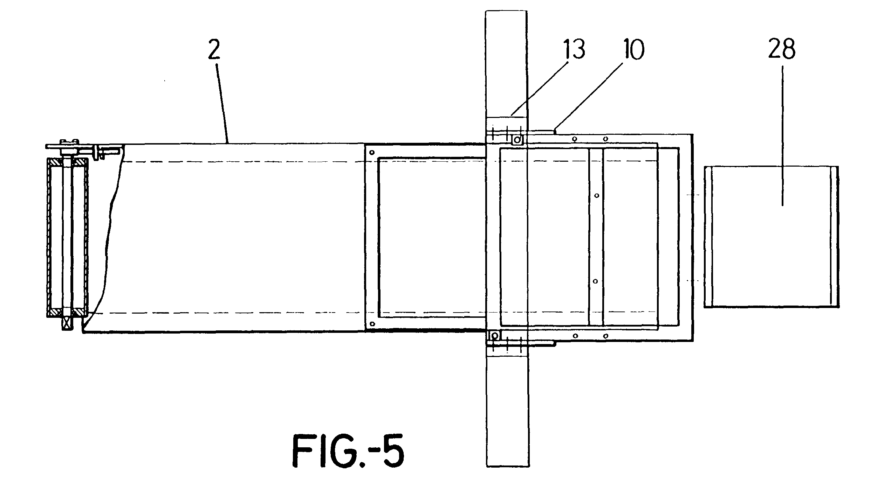

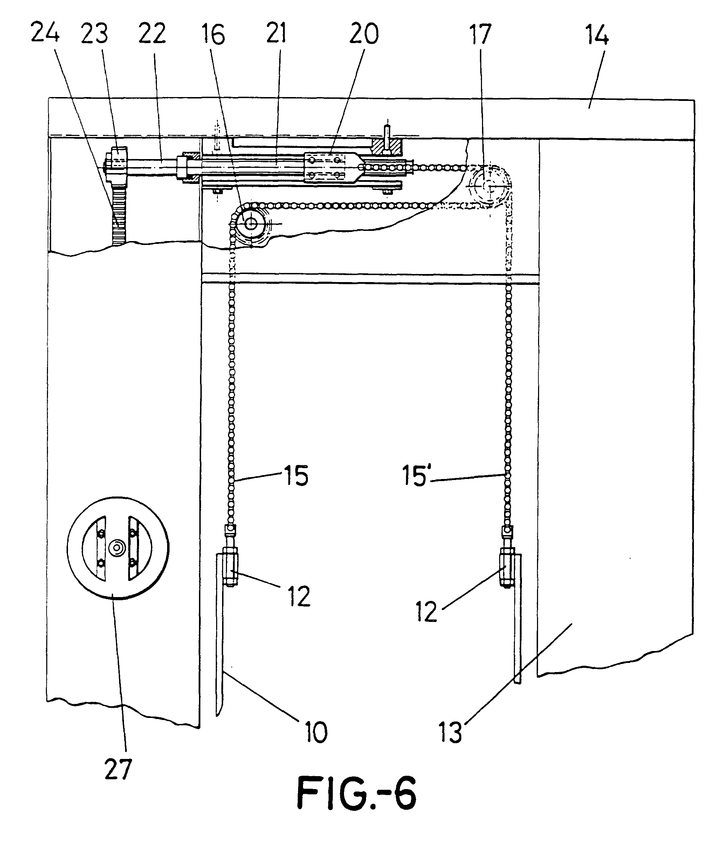

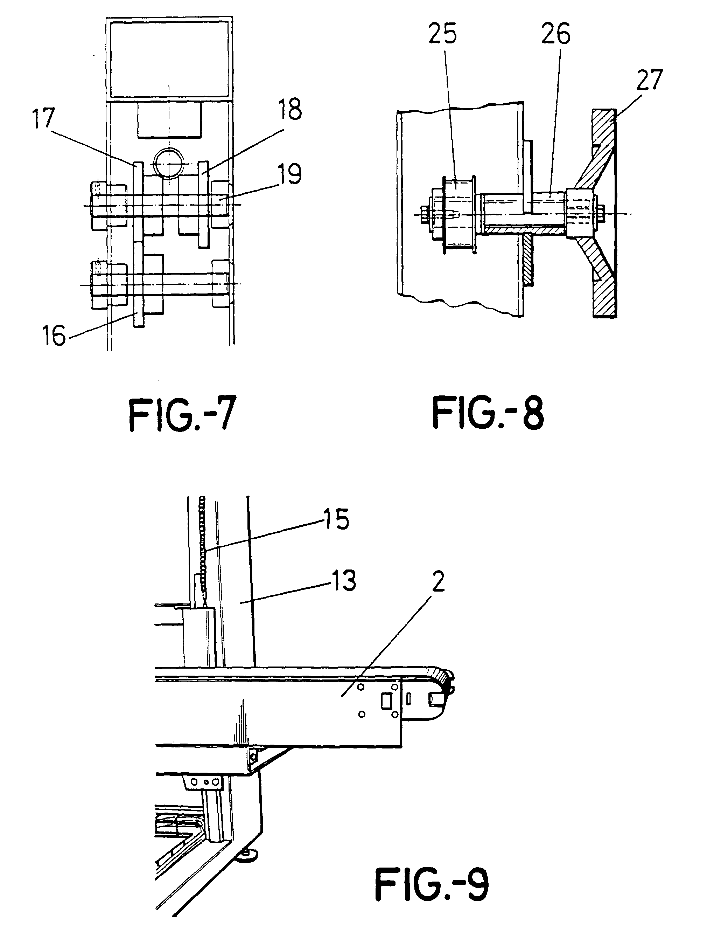

Figures 4 to 9 show another of the improvements of the invention, consisting of a height adjustment mechanism for the conveyor or ejection belt (2), which mechanism lies in using a chassis (10) which includes an integral structure (11), altogether defining an element supporting the ejection conveyor belt (2), which chassis (10) can move vertically along a pair of side guides or columns (13) that are transversely closed at the top by a bridge (14), the chassis (10) having coupling means to the vertical channels defined in the guides (13) for a suitable vertical displacement thereof, both upwardly and downwardly.

Upward chains (15-15') are locked to the chassis (10) at its side areas (12) and level with the guides (13), one of the chains, reference numeral (15), working with a pair of pinions (16) and (17) whereas the other one works with a single pinion (18) which is adjusted on the same axis (19) as the second pinion (17) of the first chain, both chains (15-15') being locked through their top end opposite the end attached to the chassis (10) to a nut (20) established within the transverse bridge (14) and horizontally displaceable with the assistance of a hand-driven spindle (21).

More specifically, this spindle (21) extends into a shaft (22) that ends in a pulley (23) which, through a drive belt (24), receives the movement of another pulley (25) located at a lower level and keyed to the shaft (26) of a hand-driven wheel (27), although this transmission system based on pulleys and a belt may obviously be replaced with a system of pinions and chain, by a spindle system or by such other conventional system as may be deemed suitable. Specifically, in the practical embodiment shown in figures 4 to 9 and because the shaft (22) of the spindle is perpendicular to the shaft (26) of the wheel (27), the drive belt (24) suffers a 90° torsion in its run in order for coupling to be possible and efficient, which torsion would be unnecessary if the wheel (27) were positioned on a different face of the respective guide column or frame (13), or if the transmission means were different.

In any event, the spindle (21) is able through the drive wheel (27) to pull the chains (15-15') or as appropriate allow them to be lowered, consequently at the same time vertically displacing the chassis (10) along the guides (13), in order to suit the position of the conveyor belt (2) to the specific requirements of each sack size, as concerns its height.

Finally, it only remains to be said, with reference again to figure 4, that the chassis (10) supporting the conveyor belt (2) in turn supports the sack tamping-compacting mechanism (28) during the sack filling phase, and therefore at the same time as the height of the conveyor belt (2) is adjusted, so is the height of said tamper-compactor (28) adjusted as required.

## Claims

1. Sack evacuation method for sacking machines, applicable to machines meant to form, fill and close sacks of several heights and which are provided with a mechanism (5) for sealing the sacks and a conveyor belt (2) for their evacuation, **characterised in that** it consists of providing sacks (3), at the time when they are released from the sack sealing mechanism (5), with an inclined position so that their top end is advanced with respect to their bottom end, in an amount sufficient so that when said sacks (3) are released they turn by gravity in this same sense, until they contact the preceding sack, all such that along the evacuation conveyor belt said sacks increase their inclination until they are in a fully horizontal position (3'), which they arrive at gently, without any sudden impacts.

2. Sack evacuation method for sacking machines, as claimed in claim 1, **characterised in that** the initial inclination of sacks (3) is obtained by control of the intermittent motion of conveyor belt (2), using photoelectric cells (9) which after detecting the presence of sack (3) execute a suitable control of the motion of conveyor belt (2), in order to obtain a perfect control of the gradual inclination of the sacks.

3. Sack evacuation method for sacking machines, as claimed in above claims, **characterised in that** after sacks (3) fall to a horizontal position a descending segment is provided in their path with an inclination and length such that in said descending path of the sacks, with their opening facing downwards, the contents are stirred and partially displaced towards said opening in order to evenly distribute the contents of the sack.

4. Sack evacuation method for sacking machines, as claimed in claim 1, **characterised in that** in order to make it suitable for the specific size of each sack, conveyor belt (2) may be moved in height, specifically by moving chassis (10) which supports said conveyor belt along a pair of lateral guides (13) and by traction of lateral chains (15-15') from which the chassis is suspended and which are driven from a manual wheel.

5. Sack evacuation method for sacking machines, as claimed in claim 4, **characterised in that** said chains (15-15') are provided with bends in their trajectories by means of gears (16), (17) and (18), until their initial rising segments become upper horizontal segments, where they are attached to a screw (20) by which they are driven, thereby raising chassis (10), using a manual wheel (27) with which a spindle (21) is turned which moves screw (20), wheel (27) transmitting its motion to spindle (21) by means of a pair of pulleys (23) and (25) with their corresponding transmission belt.

6. Sack evacuation method for sacking machines, as claimed in claims 4 and 5, **characterised in that** in parallel to the height adjustment of chassis (10) in order to adjust the height of conveyor belt (2) and make it suitable for each size of sack, the height is adjusted of rammer-compacter (28) which acts on the sacks during their filling stage, which adjustment takes place automatically simultaneously to that of the conveyor belt.

## Patentansprüche

1. Methode für den Abtransport von Säcken aus Sackabfülleinrichtungen, die bei Maschinen einsetzbar ist, die für die Formung, Befüllung und das Verschliessen von Säcken unterschiedlicher Höhen konzipiert sind und die ein Abtransportband aufweisen, das sich dadurch kennzeichnet, dass den Säcken (3), in dem Moment, in dem sie den Verschliessungsmechanismus (5) verlassen, eine schräge Positionierung gegeben wird, so dass deren oberes Ende dem unteren Ende in einer geeigneten Grösse vorausliegt, so dass bei ihrer Freisetzung die besagten Säcke (3) durch ihre Schwerkraft in diese gleiche Richtung kippen, bis sie an dem direkt davorliegenden Sack anstossen, all das in solch einer Form, dass die besagten Säcke auf dem Abtransportband allmählich ihre Schrägstellung bis zum totalen Kippen in eine waagerechte Position (3') erhöhen, in die sie in sanfter Form, ohne abrupte Stösse, gelangen.

2. Methode für den Abtransport von Säcken aus Sackabfülleinrichtungen nach dem Patentanspruch 1, **dadurch gekennzeichnet, dass** die anfängliche Schrägstellung der Säcke (3) mittels Kontrolle der aussetzenden Bewegung des Transportbandes (2) erlangt wird, wobei zu diesem Zweck photoelektrische Zellen (9) eingesetzt werden, die nach dem Ermitteln der Präsenz des Sackes (3) eine geeignete Kontrolle der Bewegung des Transportbandes (2) durchführen, um eine perfekte Graduierung der allmählichen Schrägstellung der Säcke zu erreichen.

3. Methode für den Abtransport von Säcken aus Sackabfülleinrichtungen nach den vorhergehenden Patentansprüchen, **dadurch gekennzeichnet, dass** nach dem Abkippen der Säcke (3) bis in die Waagerechte, dazu übergegangen wird, auf ihrem Transportweg eine Abwärtsphase mit einer Länge und Schrägstellung zu bilden, die dazu führt, dass auf besagter abwärts gerichteten Bandabschnitt des Sackes, mit seiner nach unten gerichteten Öffnung, eine Umverteilung seines Inhaltes bewirkt wird, mit einer teilweisen Verschiebung des Inhaltes in Richtung der Öffnung, um das Produkt im Inneren des Sackes in seinem Volumen gleichmässig zu verteilen.

4. Methode für den Abtransport von Säcken aus Sackabfülleinrichtungen nach dem Patentanspruch 1, **dadurch gekennzeichnet, dass** zu dessen Anpassung an die spezifische Grösse jeder Sackart, die Bewegung in Höhe des Transportbandes (2) vorgesehen ist, konkret die Bewegung des Gestelles (10), das das besagte Transportband trägt, auf einem Paar seitlicher Führungen (13) und mittels Zug auf die seitlichen Ketten (15-15') an denen das Gestell gehängt ist, die von einem handbetätigten Rad beaufschlagbar sind.

5. Methode für den Abtransport von Säcken aus Sackabfülleinrichtungen nach dem Patentanspruch 4, **dadurch gekennzeichnet, dass** die erwähnten Ketten (15-15') auf ihrem Wegabschnitt mittels Zahnräder (16), (17) und (18) Beugungen ausgesetzt werden, bis sich ihre aufwärtgehenden und anfänglichen Abschnitte in höhere und waagerechte Abschnitte wandeln, wo sie an einer Mutter (20) fixiert werden, mit der das Ziehen derselben erfolgt, und das folgerichtige Anheben des Gestelles (10) mittels handbetätigtem Rad (27) mit dem eine Spindel (21) in eine Drehung versetzt wird, um die Mutter (20), das Rad (27) zu bewegen, die die Bewegung über ein para Riemenscheiben (23) und (25) mit seinem entsprechenden Übertragungsriemen (24) an die Spindel (21) weiterleiten.

6. Methode für den Abtransport von Säcken aus Sackabfülleinrichtungen nach den Patentansprüchen 4 und 5, **dadurch gekennzeichnet, dass** parallel zur Höhenregulierung des Gestelles (10) und der gleichzeitigen Regulierung der Höhe des Transportbandes (2) und deren Anpassung an die Grösse der Säcke, eine Höhenregulierung des Stoss - und Verdichtungsmechanismus (28), der während der Befüllungsphase auf die Säcke wirkt, vorgenommen wird, eine Regulierung, die automatisch zur gleichen Zeit, wie die des Transportbandes selbst erfolgt.

## Revendications

1. Procédé d'évacuation de sacs hors de machines à ensacher, qui étant applicable à des machines capables de former, remplir et fermer des sacs de différente taille en hauteur et qui disposent d'un tapis roulant d'évacuation, se **caractérise en ce que** les sacs (3), au moment où ils se libèrent du mécanisme (5) de fermeture de ces derniers, sont entraînés en position inclinée, de manière que leur extrémité supérieure soit suffisamment décalée vers l'avant par rapport à leur extrémité inférieure pour qu'une fois ces sacs (3) libérés, ils basculent par leur propre poids du côté où ils penchent, jusqu'à buter contre le sac précédent, le tout de manière que les sacs, le long du tapis roulant d'évacuation, augmentent progressivement leur inclinaison jusqu'à atteindre la position horizontale (3') en douceur et sans à-coups.

2. Procédé d'évacuation de sacs hors de machines à ensacher, selon la revendication 1, **caractérisée en ce que** l'inclinaison de départ des sacs (3) est obtenue par le contrôle du mouvement intermittent du tapis roulant (2), en utilisant pour cela des cellules photoélectriques (9) qui, après avoir détecté la présence d'un sac (3), réalisent le contrôle adéquat du mouvement du tapis roulant (2) pour une graduation parfaite de l'inclinaison progressive des sacs.

3. Procédé d'évacuation de sacs hors de machines à ensacher, selon les revendications précédentes, **caractérisée en ce qu'**après le basculement des sacs (3) jusqu'à la position horizontale, on procède à établir sur leur trajectoire une phase de descente, d'une longueur et une inclinaison adéquates pour que pendant cette trajectoire descendante du sac, avec son ouverture orientée vers le bas, il se produise un remuement de son contenu, avec déplacement partiel de celui-ci vers l'ouverture, de manière à homogénéiser le volume du produit à l'intérieur du sac.

4. Procédé d'évacuation de sacs hors de machines à ensacher, selon la revendication 1, **caractérisée en ce que** pour son adaptation à la taille spécifique de chaque type de sac, il a été prévu la mobilité en hauteur du tapis roulant (2), concrètement la mobilité du châssis (10) support de ce tapis roulant sur deux guides latérales (13) et par traction sur des chaînes latérales (15-15') auxquelles est suspendu le châssis et qu'on peut actionner à l'aide d'un volant manuel.

5. Procédé d'évacuation de sacs hors de machines à ensacher, selon la revendication 4, **caractérisée en ce que** lesdites chaînes (15-15') sont soumises à des inflexions sur leur trajectoire, à l'aide de pignons (16), (17) et (18), jusqu'à convertir leurs tronçons ascendants et initiaux en tronçons supérieurs et horizontaux, où elles sont fixées à un écrou (20) à l'aide duquel est réalisé l'entraînement de ces chaînes et l'élévation du châssis (10) qui en découle, à l'aide d'un volant manuel (27) qui fait tourner un fuseau (21) pour le déplacement de l'écrou (20), volant (27) qui transmet le mouvement au fuseau (21) au moyen de deux poulies (23) et (25) avec leur courroie de transmission (24) correspondante.

6. Procédé d'évacuation de sacs hors de machines à ensacher, selon les revendications 4 et 5, **caractérisée en ce que** parallèlement à la régulation en hauteur du châssis (10), pour régler aussi en hauteur le tapis roulant (2) et l'adapter à la taille des sacs, on réalise le réglage en hauteur du frappeur-compacteur (28) qui agit sur les sacs pendant la phase de remplissage de ceux-ci, réglage qui a lieu automatiquement, en même temps que celui du tapis roulant.
